# EUROPEAN PATENT APPLICATION

(11) **EP 4 464 184 A1**
(43) Date of publication of application: **20.11.2024**
(21) Application number: 24386039.2
(22) Date of filing: 02.04.2024
(51) Int. Cl.: A41D 13/01

(54) **SELF-LIGHTING CLOTHING, FOOTWEAR AND CLOTHING ACCESSORIES FOR DAILY USE AND SAFETY**

(30) Priority: 16.05.2023 GR 20230100397
(71) Applicant: Stasis, Theodoros, 16561 Ano Glyfada (GR)
(72) Inventor: Stasis, Theodoros, 16561 Ano Glyfada (GR)

(57) **Abstract**

This invention is self-lighting clothing, footwear and clothing accessories of all kinds for everyday use by people of all ages, intended to warn others and protect the user them from an upcoming danger, especially during the hours when there is no lighting or little lighting
in the surrounding area.

The technology of self-lighting materials in everyday clothes, even their entire construction with such materials, make the person who wears them visible to any third party passing by from a safe distance.

The charging of the self-lighting fabrics is done by natural daylight or with artificial light, coming from a lamp without much effort,

## Description

This invention is self-lighting clothing, footwear and clothing accessories of all kinds for everyday use by people of all ages, intended to warn others and protect the user them from an upcoming danger, especially during the hours when there is no lighting or little lighting in the surrounding area.

On a daily basis, all people, regardless of age, move indoors and outdoors with greater or lesser risk depending on the potential carelessness while walking and the possible collision with other passing persons. Each person's clothes are the points that a third person notices first and automatically adjusts his movements to avoid a possible collision.

The technology of self-lighting materials in everyday clothes, even their entire construction with such materials, make the person who wears them visible to any third party passing by from a safe distance.

In particular, everyday men's, women's and children's clothing of all types, such as, indicatively, trousers, skirts and jackets, are equipped and decorated or made entirely of fabrics, which absorb light, natural or artificial, and then, when the lighting around them becomes less due to the setting of the sun or the walking of the person in some space with reduced lighting such as in an arcade or in a corridor of an apartment building, these fabrics produce sufficient brightness to make the person that wears them visible to other persons, who move near him.

The technology of this invention, with total or partial application of self-illuminating fabrics, can be adapted not only to clothing but also to footwear of all kinds. Also, the technology of this invention, with full or partial application of self-lighting fabrics, can apply to clothing accessories such as armbands. Moreover, the technology of this invention can be applied by attaching extra clothing pieces of self-lighting fabric to various body parts such as bandanas or head bows or to items such as, indicatively, bags, belts and socks.

This invention makes the user visible even in completely dark places.

This invention prevents its user from colliding either in a small scale or in a large one.

In case the user of this invention becomes unconscious, his body becomes visible thanks to the self-lighting clothes, like a buoy, so that he will be located immediately and be looked after.

The present invention creates excitement and joy in young children due to the light and glow the self-lighting clothing, footwear and othr clothing accessories emit.

The self-lighting parts of this invention can be cut into different sizes and shapes in order to be more aesthetically pleasing, eye-catching and fulfill their purpose of immediately locating a person and preventing collision with them.

The use of this invention to footwear, which are moving constantly due to their nature, making their user immediately visible to any passer-by.

In this invention, the charging of the self-lighting fabrics is done by natural daylight or with artificial light, coming from a lamp without much effort. This means that even the minimal light of any origin can charge the fabric of this invention so that it later performs the function of lighting.

In this invention, self-lighting accessories can fulfill a person's need to be visible without getting rid of his conventional, non-lighting garments.

This invention can also be used as a pet accessory.

## Claims

1. This invention is self-lighting clothes, footwear and clothing accessories of all kinds for everyday use by people of all ages, intended to warn others and protect the user them from an upcoming danger, especially during the hours when there is no lighting or little lighting in the surrounding area.

2. Self-lighting clothing, footwear and clothing accessories, according to Claim 1, which make the person who wears them visible to any third party passing by from a safe distance.

3. Self-lighting clothing, footwear and clothing accessories, according to Claim 1, which are everyday men's, women's and children's clothing of all types, are equipped and decorated or made entirely of fabrics, which absorb light, natural or artificial, and then, when the lighting around them becomes less, they produce sufficient brightness to make the person that wears them visible to other persons, who move near him.

4. Self-lighting clothing, footwear and clothing accessories, according to Claim 1, which can apply to clothing accessories such as armbands.

5. Self-lighting clothing, footwear and clothing accessories, according to Claim 1, whose technology can be applied by attaching extra clothing pieces of self-lighting fabric to various body parts such as bandanas or head bows or to items such as, indicatively, bags, belts and socks.

6. Self-lighting clothing, footwear and clothing accessories, according to Claim 1, that make the user visible even in completely dark places.

7. Self-lighting clothing, footwear and clothing accessories, according to Claim 1, where in case the user becomes unconscious, his body becomes visible thanks to the self-lighting clothes, like a buoy, so that he will be located immediately and be looked after.

8. Self-lighting clothing, footwear and clothing accessories, according to Claim 1, where its self-lighting parts can be cut into different sizes and shapes in order to be more aesthetically pleasing, eye-catching and fulfill their purpose.

9. Self-lighting clothing, footwear and clothing accessories, according to Claim 1, where the charging of their self-lighting fabrics is done by natural daylight or with artificial light, coming from a lamp without much effort.

10. Self-lighting clothing, footwear and clothing accessories, according to Claim 1, which can also be used as a pet accessory.
